# EUROPÄISCHE PATENTSCHRIFT

(11) **EP 2 152 761 B1**
(45) Veröffentlichungstag und Bekanntmachung des Hinweises auf die Patenterteilung: **30.03.2011**
(21) Anmeldenummer: 08750151.6
(22) Anmeldetag: 07.05.2008
(51) Int. Cl.: C08F 2/44

(54) **VERFAHREN ZUR HERSTELLUNG VON KUNSTSTOFFEN MIT NETZWERKEN AUS NANOPARTIKELN**
PROCESS FOR THE PRODUCTION OF PLASTICS HAVING NETWORKS MADE OF NANOPARTICLES
PROCEDE DE FABRICATION DE MATIÈRES PLASTIQUES À RÉSEAUX CONSTITUÉS DE NANOPARTICULES

(30) Priorität: 06.06.2007 DE 102007026632; 20.12.2007 DE 102007063471
(43) Veröffentlichungstag der Anmeldung: 17.02.2010
(73) Patentinhaber: BAM Bundesanstalt für Materialforschung und -prüfung, 12205 Berlin (DE)
(72) Erfinder: WOHLRAB, Sebastian, 12157 Berlin (DE); FRIEDRICH, Jörg, 15537 Erkner (DE); MEYER-PLATH, Asmus, 14471 Potsdam (DE)
(74) Vertreter: Gulde Hengelhaupt Ziebig & Schneider
(86) Internationale Anmeldenummer: PCT/EP2008/055632
(87) Internationale Veröffentlichungsnummer: WO 2008/148619

(56) Entgegenhaltungen:
- WO-A-01/32760
- US-A- 5 780 525
- NOVAK B M: "HYBRID NANOCOMPOSITE MATERIALS-BETWEEN INORGANIC GLASSES AND ORGANIC POLYMERS" ADVANCED MATERIALS, WILEY VCH, WEINHEIM, DE, Bd. 5, Nr. 6, 1. Juni 1993 (1993-06-01), Seiten 422-433, XP000369619 ISSN: 0935-9648
- JANG J ET AL: "A simple synthesis of mesoporous carbons with tunable mesopores using a colloidal template-mediated vapor deposition polymerization" CHEMICAL COMMUNICATIONS - CHEMCOM, ROYAL SOCIETY OF CHEMISTRY, Bd. 33, 1. Januar 2005 (2005-01-01), Seiten 4214-4216, XP003009945 ISSN: 1359-7345
- GILMAN J W ET AL: "Nanocomposites: A revolutionary new flame retardant appoach" SAMPE JOURNAL, AZUSA, CA, US, Bd. 33, Nr. 4, 1. Januar 1997 (1997-01-01), Seiten 40-46, XP009029920 ISSN: 0091-1062
- WANG ET AL: "Effect of acrylic polymer and nanocomposite with nano-SiO2 on thermal degradation and fire resistance of APP-DPER-MEL coating" POLYMER DEGRADATION AND STABILITY, BARKING, GB, Bd. 91, Nr. 9, 1. September 2006 (2006-09-01), Seiten 1937-1947, XP005483220 ISSN: 0141-3910

## Beschreibung

Die Erfindung betrifft ein Verfahren zur Herstellung von Kunstoffen mit metall- oder halbmetallhaltigen Netzwerken aus Nanopartikeln.

### Technologischer Hintergrund und Stand der Technik

Es ist bekannt, dass die Eigenschaften von Kunststoffen durch Integration nanoskaliger Füllstoffe gezielt verändert werden können. So wurden Kunststoffe mit integrierten, nanoskaligen und vereinzelten Partikeln beschrieben, deren mechanisches Verhalten, elektrische und elektrooptische Eigenschaften oder deren Brandverhalten durch den Einsatz der Füllstoffe verbessert wurde. Weiterhin sind Kunststoffe mit integrierten Aggregaten aus nanoskaligen Füllstoffen bekannt, die ähnliche Auswirkungen auf den Kunststoff ausüben. Nachteile derartig modifizierter Kunststoffen liegen vor allem in der Herstellung; so kann es zu einer Aggregation der Füllstoffe kommen oder die Füllstoffe besitzen nur eine unzureichende Phasenkompatibilität mit dem Kunststoff. In Kunststoffe integrierte, nanoskalige und vereinzelte Partikel und in Kunststoffe integrierte Aggregate aus nanoskaligen Partikeln schützen ferner den Kunststoff nur bedingt vor mechanischer Beanspruchung oder umweltbedingtem Abbau. Des weiteren liegt bei isoliert integrierten Nanopartikeln in Kunststoffen unterhalb der Perkolationsschwelle keine Verknüpfung der Partikel untereinander vor, so dass ein Ladungs-, Wärme- oder Strahlungstransport sowie ein Kräftetransport entlang des Füllstoffes nur eingeschränkt möglich ist.

In Kunststoffe integrierte, nanoskalige Netzwerke aus SiO₂ können durch ein Sol-Gel-Verfahren erzeugt werden (E. Pope, M. Asami, J. Mackenzie, J. Mater. Res. 1989, 4, 1018 - 1026). Zunächst wird das nanoskalige SiO₂-Netzwerk durch Hydrolyse von Tetraethylorthosilikat unter Bildung eines Gels, dann Trocknung und Kalzinierung des Gels erhalten. Anschließend wird das nanoskalige SiO₂-Netzwerk mit einer Kunststoffvorstufe befüllt, die nachfolgend zum Kunststoff umgesetzt wird.

Nachteilig an dem geschilderten Vorgehen zur Herstellung von Kunststoffen mit nanoskaligem SiO₂-Netzwerk ist, die notwendige Herstellung des Aerogels. Hier erweist sich die Überkritische Trocknung als sehr aufwendig. Andere Trocknungsmethoden verändern das Netzwerk ungünstig und können somit nur bedingt angewendet werden. Auch lassen sich mit einem Trocknungsschritt nur eine begrenzte Anzahl an Netzwerken aus Nanopartikeln bzw. Aerogelen herstellen. Großflächige Beschichtungen sind mit einem vorgelagerten Trocknungsschritt nahezu unmöglich.

Der Erfindung liegt die Aufgabe zugrunde, die geschilderten Nachteile des Standes der Technik zu überwinden.

### Zusammenfassung der Erfindung

Ein Aspekt der Erfindung liegt in der Bereitstellung eines Verfahrens zur Herstellung von Kunststoffen mit metall- oder halbmetallhaltigen Netzwerken aus Nanopartikeln. Das erfindungsgemäße Verfahren umfasst die Schritte gemäß Anspruch 1:
(i) Herstellen eines metall- oder halbmetallhaltigen Netzwerks aus Nanopartikeln in einem flüssigen Medium mittels Hydrolyse und anschließender Polykondensation eines oder mehrerer Alkoxide der Formel (1)

   M(OR)ₓ (1)

   in einem Sol-Gel-Prozess unter Ausbildung des metall- oder halbmetallhaltigen Netzwerks aus Nanopartikeln, wobei M für ein Metall oder Halbmetall ausgewählt aus der Gruppe Li, Na, K, Mg, Ca, Sr, Ba, Al, In, Si, Sn, Pb, Sb, Bi, Y, Ti, Zr, V, Nb, Ta, Cr, W, Mn, Zn und Cd steht, R ein verzweigter oder unverzweigter C1-C10-Alkylrest und x = 1 bis 7 ist;
(ii) Ersetzen des flüssigen Mediums durch eine flüssige Kunststoffvorstufe, sofern das flüssige Medium nicht bereits die flüssige Kunststoffvorstufe darstellt, wobei die flüssige Kunststoffvorstufe aus einer oder mehreren polymerisationsfähigen Verbindungen, ein oder mehreren flüssigen Polymeren oder einer Lösung eines oder mehrerer Polymere in einem Lösungsmittel besteht und das Netzwerk aus Nanopartikeln stets in Kontakt mit dem flüssigen Medium oder der flüssigen Kunststoffvorstufe steht; und
(iii) Herstellen des Kunststoffs durch Polymerisation der polymerisationsfähigen Verbindungen oder Verfestigen der flüssigen Polymere oder Entzug des Lösungsmittels aus der Lösung der Polymere,
bei dem die Herstellung des metall- oder halbmetallhaltigen Netzwerks aus Nanopartikeln durch während der Polymerisation der polymerisationsfähigen Kunststoffvorstufe freigesetztes Wasser induziert wird und die Herstellung des metall- oder halbmetallhaltigen Netzwerks aus Nanopartikeln in der flüssigen Kunststoffvorstufe erfolgt.

Der Erfindung liegt die Erkenntnis zugrunde, dass Kunststoffe mit metall- oder halbmetallhaltigen Netzwerken aus Nanopartikeln sich in reproduzierbarer Weise und mit geringem verfahrenstechnischen Aufwand herstellen lassen, wenn das metall- oder halbmetallhaltige Netzwerk aus Nanopartikeln zunächst in einem flüssigen Medium erzeugt wird und die Gegenwart eines flüssigen Mediums in den weiteren Prozessschritten hin zum Kunststoff beibehalten wird. Mit anderen Worten, das metall- oder halbmetallhaltige Netzwerk aus Nanopartikeln wird nicht isoliert und z.B. durch thermische oder überkritische Behandlung getrocknet. Vielmehr verbleibt das metall- oder halbmetallhaltige Netzwerk aus Nanopartikeln durchgehend in einer flüssigen, austauschbaren Umgebung, die zum Beispiel am Ende des Herstellungsprozesses durch Polymerisation in Gegenwart des Netzwerkes ausgehärtet wird.

Der Begriff ,Kunststoff mit Netzwerk aus Nanopartikeln' bezeichnet vorliegend eine netzwerkartige, dreidimensionale Anordnung von Nanopartikeln zu einer porösen Struktur, wobei die Poren vorliegend mit einem Kunststoff ausgefüllt sind. Die Nanopartikel liegen dabei nicht agglomeriert, sondern kettenförmig vernetzt vor. Als Nanopartikel sind definiert Partikel, die in wenigstens einer räumlichen Dimension kleiner als 1000 nm sind. Eindimensionale Nanopartikel sind plättchenförmig, zweidimensionale sind stäbchenförmig und dreidimensionale sind im Idealfall sphärisch.

Im Schritt (i) des erfindungsgemäßen Verfahrens wird das metall- oder halbmetallhaltige Netzwerk aus Nanopartikeln in dem flüssigen Medium hergestellt. Dazu erfolgt im Schritt (i) eine Hydrolyse und anschließende Polykondensation eines oder mehrerer Alkoxide der Formel (1)

M(OR)ₓ (1)

in einem Sol-Gel-Prozess unter Ausbildung des metall- oder halbmetallhaltigen Netzwerks aus Nanopartikeln, wobei M für ein Metall oder Halbmetall ausgewählt aus der Gruppe Li, Na, K, Mg, Ca, Sr, Ba, Al, In, Si, Sn, Pb, Sb, Bi, Y, Ti, Zr, V, Nb, Ta, Cr, W, Mn, Zn und Cd steht, R ein verzweigter oder unverzweigter C1-C10-Alkylrest und x = 1 bis 7 ist. Bevorzugt ist dabei M ein Metall ausgewählt aus der Gruppe Al, Pb, Ti, Zr, V, Nb, Ta, Zn und Cd. Insbesondere steht M für Al und ist x = 3. Bevorzugt steht R für 2-Butyl (sec-Butyl). Ferner können bimetallische Alkoxide der genannten Metalle Einsatz finden. Derartige Oxokomplexe sind beispielsweise für die Systeme Ba/Zr und Ba/Nb beschrieben wurden (E.P. Turevskaya et al., Polyhedron, 1995, Vol. 14, 1531 - 1542; E.P. Turevskaya et al., Journal of Sol-Gel Science and Technology 1997, Vol. 8, 111 - 115).

Der Vorteil des Sol-Gel-Prozesses ist, dass sich bei der konkreten Ausgestaltung des Verfahrens auf eine etablierte Prozesstechnik gestützt werden kann. Das Alkoxid oder eine Mischung von Alkoxiden wird in Gegenwart eines Lösungsmittels hydrolisiert. Das Lösungsmittel kann bereits die flüssige Kunststoffvorstufe sein. Das entstehende Sol wird nun einer Geometrie des gewünschten Formkörpers entsprechend zum Gel hydrolisiert, vorzugsweise mit Hilfe eines sauren oder basischen Katalysators. Nach der Gelierung wird gegebenenfalls das im Gelkörper vorhandene Lösungsmittel gegen die flüssige Kunststoffvorstufe ausgetauscht (Verfahrensschritt (ii)).

Denkbar ist auch, das metall- oder halbmetallhaltige Netzwerk aus Nanopartikeln durch Zugabe von Epoxiden, wie Propylenoxid, zu Lösungen von Metallsalzen herzustellen, wobei das gewünschte Netzwerk aus Nanopartikeln aus einem nach der Zugabe nachgelagerten Reaktionsschritt resultiert.

Im Schritt (ii) wird das flüssige Medium, in dem das Netzwerk aus Nanopartikeln erstellt wurde, ersetzt, sofern dieses flüssige Medium nicht bereits die flüssige Kunststoffvorstufe ist. Letztere Verfahrensvariante, also die Darstellung des Netzwerks aus Nanopartikeln in der flüssigen Kunststoffvorstufe, stellt eine in-situ Variante der Verfahrensführung dar und ist bevorzugt.

Eine besondere Verfahrensvariante im Zusammenhang mit der Herstellung des metall- oder halbmetallhaltigen, Netzwerks aus Nanopartikeln über den Sol-Gel-Prozess sieht vor, dass die Herstellung dieses Netzwerks durch während der Polymerisation der polymerisationsfähigen Kunststoffvorstufe freigesetztes Wasser induziert wird. Mit anderen Worten, das Verfahren wird in-situ in der polymerisationsfähigen Kunststoffvorstufe durchgeführt, wobei die Polymerisation selbst zur Freisetzung von Wasser führt (zumeist eine Polykondensation). Das freigesetzte Wasser startet wiederum die Gelierung des zu integrierenden metall- oder halbmetallhaltigen Netzwerks aus Nanopartikeln.

Bevorzugt wird weiterhin als Kunststoffvorstufe eine polymerisationsfähige Verbindung eingesetzt. Die polymerisationsfähige Verbindung ist vorzugsweise eine vinylhaltige, organische Verbindung und im Schritt (iii) erfolgt eine radikalische Polymerisation. Bevorzugt wird die Kunststoffvorstufe ausgewählt aus der Gruppe umfassend oder bestehend aus Methylmethacrylat, Diethylenglycolmethacrylat, Styrol, Divinylbenzol, Trivinylcyclohexan und Methacrylsäure-2-hydroxyethylester. Anstelle der bevorzugten radikalischen Polymerisation können gegebenenfalls auch andere Polymerisationsmechanismen Anwendung finden, zum Beispiel die Polyaddition.

Durch nachträgliche Behandlung lassen sich gegebenenfalls die integrierten, metall- oder halbmetallhaltigen Netzwerke aus Nanopartikeln modifizieren. Vorzugsweise geschieht dies unter Druck im Autoklaven durch hydrothermale oder solvothermale Behandlung, wobei neben den Kunststoffen mit integriertem Netzwerk ein Nichtlösungsmittel des Kunststoffs vorliegt und oberhalb der Siedetemperatur dieses Lösungsmittels ein Druck auf den Kunststoff mit integriertem Netzwerk ausgeübt wird. Vorzugsweise liegt die angelegte Temperatur oberhalb der Glastemperatur des Kunststoffes. Dabei können die Netzwerke aus amorphen Vorstufen kristallisieren und bereits kristalline Netzwerke einer Phasenumwandlung unterzogen werden.

Denkbar ist auch, der flüssigen Kunststoffvorstufe Additive beizumengen, die eine Verbesserung oder Anpassung des Kunststoffs mit integrierten Netzwerk aus Nanopartikeln und die jeweilige Verwendung des Materials erlauben.

Das erfindungsgemäße Verfahren dient der Bereitstellung eines Kunststoffs mit einem metallhaltigen Netzwerk aus Nanopartikeln. Sie besitzen vielfältige technische Anwendungsmöglichkeiten.

Eine weitere bevorzugte Verwendung der nach dem Verfahren erhaltenen Kunststoffe ist der Einsatz als Flamm- oder Brandschutzmaterial, da die Kunststoffe ein verändertes Brandverhalten zeigen. Das Netzwerk aus Nanopartikeln vermag den Kunststoff am Fließen hindern und das Abbrennen verzögern. Bei Anstieg des Netzwerkgehaltes wird ein zunehmend gehemmter thermischer Abbau beobachtet.

Die nach dem Verfahren erhaltenen Kunststoffe zeigen weiterhin eine höhere Härte im Vergleich zu Kunststoffen mit vereinzelten oder aggregierten Nanopartikeln. Ferner kann die Sprödigkeit in Abhängigkeit von den Eigenschaften des Füllstoffes im Vergleich zu konventionellen Kunststoffen erhöht werden. Zudem sind die Kunststoffe mit integrierten Netzwerken aus Nanopartikeln oberhalb der Glasübergangstemperatur des Polymeren thermoplastisch nicht mehr verformbar. Für viele Anwendungen kann außerdem von Vorteil sein, dass ein Kunststoff mit integriertem Netzwerk aus Nanopartikeln in der Regel nicht mehr in gängigen Lösungsmitteln des reinen Kunststoffes löslich ist. Die Kunststoffe mit integrierten Netzwerken aus Nanopartikeln zeigen zudem im Vergleich zu reinen Kunststoffen veränderte elektrische und teils auch elektrooptische Eigenschaften. Darüber hinaus können sie auch bei hohem Nanopartikelgehalt eine hohe optische Transparenz aufweisen. Kunststoffe mit integrierten Netzwerken aus Nanopartikeln können auch in Form dünner Schichten zum Beispiel mit Dicken im nm- oder µm-Maßstab auf anderen Materialien großflächig aufgetragen werden. Hier würde eine Überführung von Aerogelen in der Regel versagen, da der notwendige Trocknungsschritt rissfreie, großflächige dünne Aerogelschichten durch Spannungsrissbildung beim Trocknungsschritt gefährdet.

Alle genannten Eigenschaften lassen zahlreiche Anwendungsmöglichkeiten dieser Materialien in vielfältigen Gebieten der Technik erkennen.

Das metallhaltige Netzwerk aus Nanopartikeln besteht vorzugsweise aus Partikeln, die in zumindest eine Raumdimension eine Ausdehnung im Bereich von 1 bis 1000 nm, insbesondere 1 bis 100 nm, aufweisen.

Das metallhaltige Netzwerk aus Nanopartikeln ist vorzugsweise von einer anorganischen Verbindung abgeleitet, die ein Oxid, Hydroxid, Sulfid, Selenid oder Tellurid eines Metalls M ist, wobei M für ein oder mehrere der Elemente ausgewählt aus der Gruppe Li, Na, K, Mg, Ca, Sr, Ba, Al, In, Sn, Pb, Sb, Bi, Y, Ti, Zr, V, Nb, Ta, Cr, W, Mn, Zn und Cd steht. Die anorganische Verbindung ist vorzugsweise ausgewählt aus der Gruppe umfassend oder bestehend aus Al₂O₃, AIOOH, Al(OH)₃, MgO, Mg(OH)₂, CaO, Ca(OH)₂, SrO, Sr(OH)₂, BaO, Ba(OH)₂, TiO₂, ZnO, ZrO₂, CdO, Nb₂O₅, Ta₂O₅, V₂O₅, Cr₂O₃, SnO, PbTiO₃, Bi₄Ti₃O₁₂, LiNbO₃, LiTaO₃, NaNbO₃, NaTaO₃, KNbO₃, KTaO₃, BaTiO₄, BiWO₆, YMnO₃, CdS, CdSe, CdTe, PbS, PbSe, PbTe, ZnS, ZnSe, SnO₂, SbSnO₂, InₓSn_{y}O_{z} und ZnTe.

Das metallhaltige Netzwerk aus Nanopartikeln ist vorzugsweise ein AIOOH-Netzwerk.

Der Kunststoff ist vorzugsweise ein organisches Polymer, insbesondere ein Polyolefin, Styrolpolymer, Vinylpolymer, Polyacrylpolymer oder Polymethacrylpolymer. Insbesondere ist der Kunststoff ausgewählt aus der Gruppe umfassend oder bestehend aus Polymethylmethacrylat, Polydiethylenglycolmethacrylat, Polystyrol, Polydivinylbenzol und Polymethacrylsäure-2-hydroxyethylester.

Die mittels des erfindungsgemäßen Verfahrens herstellbaren Kunststoffe mit integrierten metallhaltigen Netzwerken aus Nanopartikeln können auf verschiedenen Gebieten der Technik Anwendung finden.

Eine bevorzugte Verwendung ist die Herstellung poröser Polymere, insbesondere von Membranen. Dazu wird das integrierte Netzwerk aus Nanopartikeln aus dem Kunststoff, vorzugsweise durch Behandlung mit Säuren oder Basen, besonders bevorzugt mit Mineralsäuren, entfernt. Es resultieren poröse Kunststoffe mit Porenmorphologien des vorher integrierten Netzwerks aus Nanopartikeln.

Sind die Netzwerke aus Partikeln aufgebaut, die elektrisch leitend sind, wie Indiumzinnoxid (ITO) oder dotiertem Zinnoxid (Sb:SnO₂), lassen sich transparente Materialien erhalten, die elektrisch leitfähig sind und zudem eine verbesserte Wärmeleitfähigkeit aufweisen können. Die elektrische Leitfähigkeit des Netzwerkes aus Nanopartikeln macht für diese Materialien auch Anwendungen als elektromagnetische Absorber oder Reflektoren möglich.

### Beschreibung der Zeichnungen

Die Erfindung wird nachfolgend anhand der dazugehörigen Zeichnungen und Ausführungsbeispielen näher erläutert. Es zeigen:
- Figur 1: ein Schema zur Herstellung von Kunststoffen mit integrierten Netzwer- ken aus Nanopartikeln als Füllstoff;
- Figur 2: einen Ultramikrotomschnitt im Elektronenmikroskop durch einen Kunst- stoff mit einem Netzwerk aus Nanopartikeln;
- Figur 3: ein Verhältnis der Shore-D-Werte zum Netzwerkgehalt;
- Figur 4: Differentialthermogravimetriemessungen (DTG-Messungen) eines Kunststoffs mit Netzwerk aus Nanopartikeln unter Sauerstoff und unter Stickstoff;
- Figur 5: ein Verhältnis der Wellenlänge zur Intensität bei verschiedenen Kunststoffen mit integriertem Netzwerken aus Nanopartikeln und unter- schiedlichem Netzwerkgehalt.

### Detaillierte Beschreibung der Erfindung

Nachfolgend wird die Erfindung in drei Ausführungsbeispielen näher erläutert. Das Ausführungsbeispiel 1 beschreibt die hier im weiteren ex-situ genannte Methode, bei der die Herstellung eines Netzwerks aus Nanopartikeln zunächst in einem Lösungsmittel erfolgt und dieses flüssige Medium nachfolgend durch eine flüssige Kunststoffvorstufe ersetzt wird. In Beispiel 1 wird das Netzwerk aus Nanopartikeln über den Sol-Gel-Prozess hergestellt. In Beispiel 2 wird eine nachfolgend als in-situ Methode beschriebene Verfahrensvariante dargestellt. Diese unterscheidet sich von Beispiel 1 dadurch, dass die Herstellung des Netzwerks aus Nanopartikeln bereits in der flüssigen Kunststoffvorstufe erfolgt. Beispiel 2 nutzt ebenfalls den Sol-Gel-Prozess. Beispiel 3 ist an Beispiel 2 angelehnt. Hier erfolgt die Herstellung des Kunststoffes durch UV-Polymerisation aus der Kunststoffvorstufe.

Es versteht sich, dass die Beispiele 1 bis 3 lediglich der Illustration der Verfahrensführung dienen. Das Verfahren ist also nicht auf die dort geschilderten konkreten Verfahrensschritte beschränkt, sondern nutzt die zuvor beschriebenen allgemeinen Ansätze.

### Beispiel 1: Herstellung von Polymethylmethacrylat mit nanoskaligem AIOOH-Netzwerk

Getrocknetes Ethanol und Aluminium-sec-butoxid wurden miteinander vermischt, so dass eine klare Lösung resultierte. Das Verhältnis beider Substanzen wirkt sich auf den Anteil des integrierten Netzwerks aus Nanopartikeln im Kunststoff maßgeblich aus und wurde variiert. Es wurden Massenverhältnisse von Ethanol zu Aluminium-sec-butoxid im Bereich von 10:1 bis 1:3 gewählt, nämlich 22,0 g Ethanol zu 22,0 g Aluminium-sec-butoxid, 30,0 g Ethanol zu 15,0 g Aluminium-sec-butoxid und 30,0 g Ethanol zu 7,5 g Aluminium-sec-butoxid. Danach wurden 10 % Wasser bezogen auf dem Anteil des Aluminium-sec-butoxid zugegeben. Das entstandene Produkt wurde unter Rühren auf 60 °C erhitzt und bei dieser Temperatur für 30 min gehalten, so dass ein AIOOH-Sol resultiert. Dieses Sol wurde durch Zugabe einer Mischung von Methanol:Essigsäure:Wasser (MEW) im Masseverhältnis von 86:13:1 in ein AIOOH-Gel überführt. Das Verhältnis AlOOH-Sol:MEW betrug 83:17.

Die in den Gelen flüssigen Bestandteile wurden mit der Polymervorstufe Methylmethacrylat:Benzoylperoxid (Massenverhältnis 100:1) dreifach extrahiert, so dass die Konzentration der Kunststoffvorstufe bei mindestens 99,9 % lag.

Polymethylmethacrylat wurde durch Polymerisation der Kunststoffvorstufe erhalten. Dazu wurde der mit der Kunststoffvorstufe extrahierte Gelkörper isoliert und in ein Gefäß und mit den Abmessungen des Gelkörpers überführt. Die Polymerisation wurde über 6 h bei 60°C durchgeführt und es folgte eine abschließende Härtung bei 90 °C für 2 h.

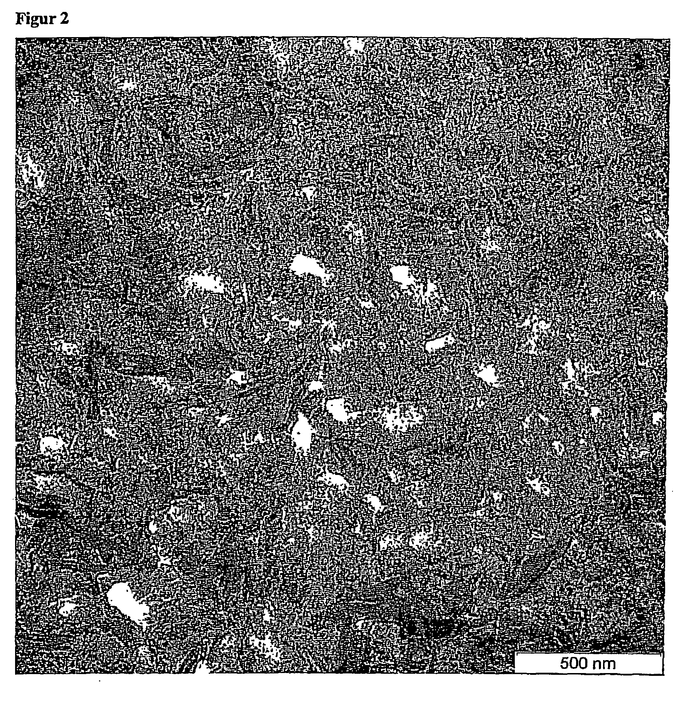

Figur 2 zeigt einen Ultramikrotomschnitt im Elektronenmikroskop durch den Kunststoff mit Netzwerk aus Nanopartikeln bei einem Massenverhältnis von Ethanol zu Aluminium-sec-butoxid von 30,0 g Ethanol zu 15,0 g Aluminium-sec-butoxid.

### Beispiel 2: Herstellung von Polymethacrylsäure-2-hydroxyethylester mit AIOOH-Netzwerk aus Nanopartikeln

Methacrylsäure-2-hydroxyethylester wurde mit verschiedenen Anteilen an Aluminium-sec-butoxid vermischt, so dass eine klare Lösung resultiert. Zu dieser Mischung wurden 2 % Benzoylperoxid gegeben. Das Verhältnis von Aluminium-sec-butoxid zu Methacrylsäure-2-hydroxyethylester wirkt sich auf den Anteil des integrierten Netzwerks aus Nanopartikeln im Kunststoff maßgeblich aus und kann variiert werden. Es wurden Massenverhältnisse im Bereich von 20:1 bis 1:1 (Methacrylsäure-2-hydroxyethylester:Aluminium-sec-butoxid) gewählt, nämlich zu jeweils 20 g Methacrylsäure-2-hydroxyethylester 2,15 g, 4,3 g bzw. 8,6 g Aluminium-sec-butoxid. Zu dieser Mischung wurde im gleichen Volumenverhältnis eine Lösung bestehend aus 1 % Wasser und 0,1 % 4,N,N-Trimethylanilin in Methacrylsäure-2-hydroxyethylester gegeben, zügig durchmischt und bei 20°C thermostatiert. Zunächst wurde die Gelierung zum AIOOH-Netzwerk beobachtet, der sich die Polymerisation zum Polymethacrylsäure-2-hydroxyethylester anschließt. Die resultierenden Materialien sind Kunststoffe (Polymethacrylsäure-2-hydroxyethylester) mit integrierten Netzwerken (AIOOH) aus Nanopartikeln als Füllstoff. Die Entfernung verbleibender flüssiger Bestandteile und die Härtung des Materials wurden bei einer Temperatur von 90°C im Vakuum vollzogen.

### Beispiel 3: Herstellung von Polymethacrylsäure-2-hydroxyethylester mit AIOOH-Netzwerk aus Nanopartikeln durch UV-Härtung

Methacrylsäure-2-hydroxyethylester wurde mit verschiedenen Anteilen an Aluminium-sec-butoxid wie in Beispiel 2 vermischt, so dass eine klare Lösung resultiert. Zu dieser Mischung wurden anstelle des Benzoylperoxids jedoch 5 % 2-Hydroxy-2-methyl-propiophenon gegeben. Es wurden Massenverhältnisse im Bereich von 20:1 bis 1:1 (Methacrylsäure-2-hydroxyethylester:Aluminium-sec-butoxid) gewählt, nämlich zu jeweils 20 g Methacrylsäure-2-hydroxyethylester 2,15 g, 4,3 g bzw. 8,6 g Aluminium-sec-butoxid. Zu dieser Mischung wurde im gleichen Volumenverhältnis eine Lösung bestehend aus 2 % Wasser in Methacrylsäure-2-hydroxyethylester gegeben, zügig durchmischt und bei 20°C thermostatiert. Zunächst wurde die Gelierung zum AIOOH-Netzwerk beobachtet. Nach 24 h Trocknung über CaCl₂ im Vakuum konnte mittels Bestrahlung bei 1 W/cm² über eine Stunde die Polymervorstufe polymerisiert werden. Die resultierenden Materialien sind Kunststoffe (Polymethacrylsäure-2-hydroxyethylester) mit integrierten Netzwerken (AIOOH) aus Nanopartikeln als Füllstoff. Die Entfernung verbleibender flüssiger Bestandteile und die Härtung des Materials wurden bei einer Temperatur von 90 °C im Vakuum vollzogen.

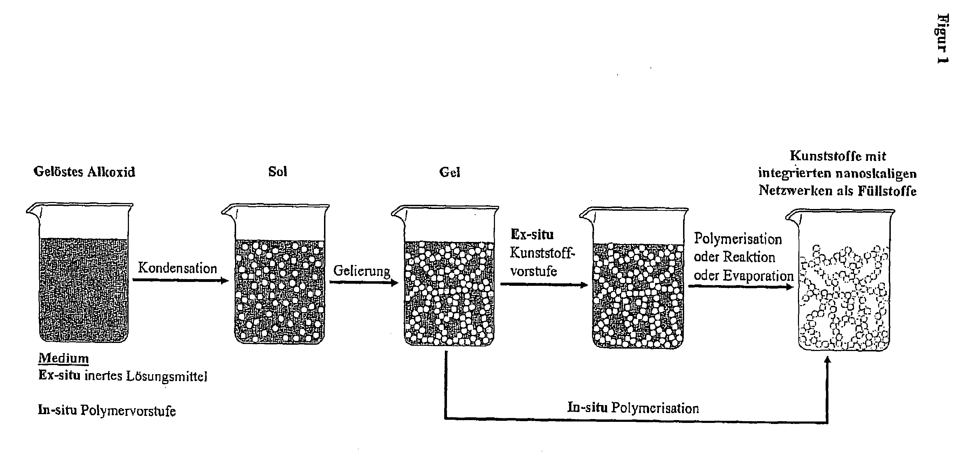

Figur 1 illustriert nochmals schematisch die Verfahrensführung in der Ex-situ- und In-situ-Variante.

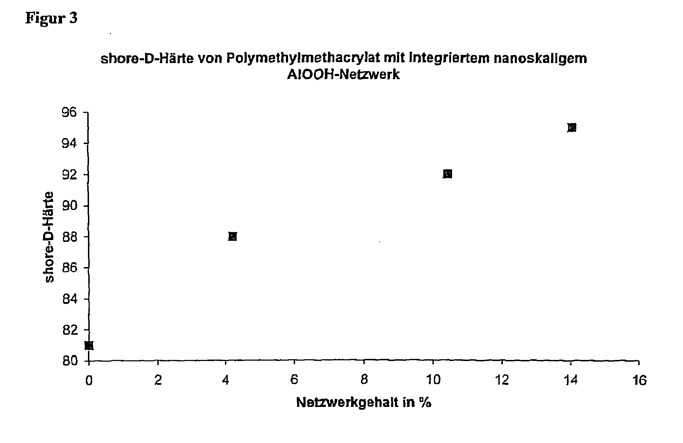

Die nach Ausführungsbeispiel 1 hergestellten PMMA-Kunststoffe mit integrierten, metallhaltigen Netzwerken aus Nanopartikeln zeigen mit Anstieg des Füllgehaltes (AIOOH) einen Anstieg der Shore-D-Härte (Figur 3).

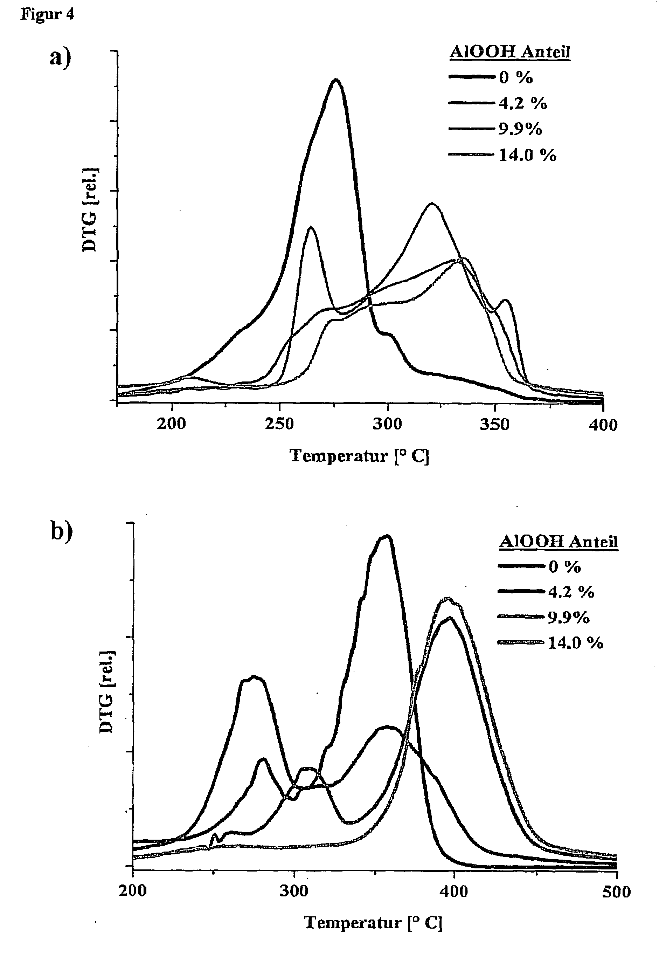

Weiterhin zeigen die gemäß Ausführungsbeispiel 1 erhaltenen PMMA-Kunststoffe ein verändertes Brandverhalten in DTG-Messungen unter Sauerstoff (a) und Stickstoff (b) mit Anstieg des Netzwerkgehaltes. Es wird deutlich, dass durch den Netzwerkanteil das Polymer erst bei höheren Temperaturen abbaut und verbrennt. Das räumlich ausgedehnte Netzwerk schützt vor thermischem Abbau (Figur 4).

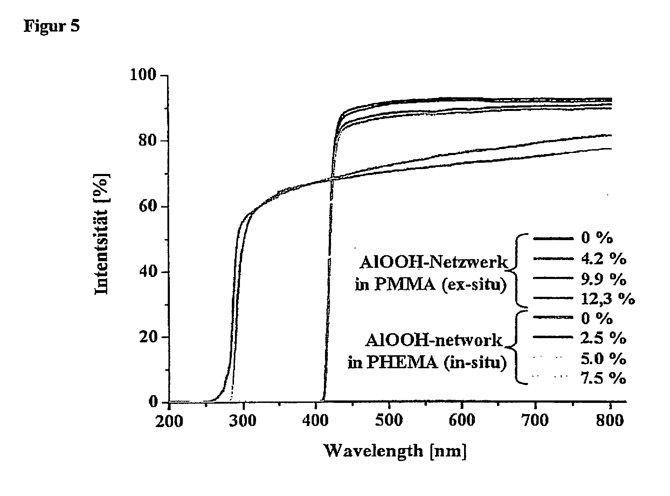

Figur 5 sind Messungen der Transparenz über die Wellenlänge der gemäß den Ausführungsbeispielen 1 und 2 erhaltenen Kunststoffe zu entnehmen. Die Probenstärke der Ex-situ-Prüflinge betrug 200 µm, die der In-situ-Prüflinge 10 mm. Es traten geringfügige Verluste der Transparenz durch Schleifeffekte beim Schneiden auf.

## Patentansprüche

1. Verfahren zur Herstellung von Kunststoffen mit metall- oder halbmetallhaltigen Netzwerken aus Nanopartikeln, umfassend die Schritte:
(i) Herstellen eines metall- oder halbmetallhaltigen Netzwerks aus Nanopartikeln in einem flüssigen Medium mittels Hydrolyse und anschließender Polykondensation eines oder mehrerer Alkoxide der Formel (1)
M(OR)ₓ (1)
in einem Sol-Gel-Prozess unter Ausbildung des metall- oder halbmetallhaltigen Netzwerks aus Nanopartikeln, wobei M für ein Metall oder Halbmetall ausgewählt aus der Gruppe Li, Na, K, Mg, Ca, Sr, Ba, Al, In, Si, Sn, Pb, Sb, Bi, Y, Ti, Zr, V, Nb, Ta, Cr, W, Mn, Zn und Cd steht, R ein verzweigter oder unverzweigter C1-C10-Alkylrest und x = 1 bis 7 ist;
(ii) Ersetzen des flüssigen Mediums durch eine flüssige Kunststoffvorstufe, sofern das flüssige Medium nicht bereits die flüssige Kunststoffvorstufe darstellt, wobei die flüssige Kunststoffvorstufe aus einer oder mehreren polymerisationsfähigen Verbindungen, ein oder mehreren flüssigen Polymeren oder einer Lösung eines oder mehrerer Polymere in einem Lösungsmittel besteht und das Netzwerk aus Nanopartikeln stets in Kontakt mit dem flüssigen Medium oder der flüssigen Kunststoffvorstufe steht; und
(iii) Herstellen des Kunststoffs durch Polymerisation der polymerisationsfähigen Verbindungen oder Verfestigen der flüssigen Polymere oder Entzug des Lösungsmittels aus der Lösung der Polymere,
bei dem die Herstellung des metall- oder halbmetallhaltigen Netzwerks aus Nanopartikeln durch während der Polymerisation der polymerisationsfähigen Kunststoffvorstufe freigesetztes Wasser induziert wird und die Herstellung des metall- oder halbmetallhaltigen Netzwerks aus Nanopartikeln in der flüssigen Kunststoffvorstufe erfolgt.

2. Verfahren nach Anspruch 1, bei dem M ein Metall ausgewählt aus der Gruppe Al, Pb, Ti, Zr, V, Nb, Ta, Zn und Cd ist.

3. Verfahren nach Anspruch 2, bei dem M für Al steht und x = 3 ist.

4. Verfahren nach Anspruch 3, bei dem R für 2-Butyl steht.

5. Verfahren nach einem der vorhergehenden Ansprüche, bei dem die Kunststoffvorstufe eine polymerisationsfähige Verbindung ist.

6. Verfahren nach Anspruch 5, bei dem die polymerisationsfähige Verbindung eine vinylhaltige, organische Verbindung ist und im Schritt (iii) eine radikalische Polymerisation erfolgt.

7. Verfahren nach Anspruch 6, bei dem die Kunststoffvorstufe ausgewählt ist aus der Gruppe umfassend oder bestehend aus Methylmethacrylat, Diethylenglycolmethacrylat, Styrol, Divinylbenzol, Trivinylcyclohexan und Methacrylsäure-2-hydroxy-ethylester.

8. Verfahren nach einem der Ansprüche 1 bis 7, wobei, anschließend Säuren oder Basen eingesetzt werden zur Entfernung des metallhaltigen Netzwerks aus Nanopartikeln.

## Claims

1. Process for producing plastics having metal- or semimetal-containing networks made of nanoparticles, encompassing the steps of:
(i) production of a metal- or semimetal-containing network made of nanoparticles in a liquid medium by means of hydrolysis and then polycondensation of one or more alkoxides of the formula (1)
M(OR)ₓ (1)
in a sol-gel process with formation of the metal- or semimetal-containing network made of nanoparticles, where M is a metal or semimetal selected from the group of Li, Na, K, Mg, Ca, Sr, Ba, Al, In, Si, Sn, Pb, Sb, Bi, Y, Ti, Zr, V, Nb, Ta, Cr, W, Mn, Zn and Cd, R is a branched or unbranched C1-C10-alkyl moiety and x = from 1 to 7;
(ii) replacement of the liquid medium by a liquid plastics-precursor material, to the extent that the liquid medium is not itself a liquid plastics-precursor material, where the liquid plastics-precursor material is composed of one or more polymerizable compounds, of one or more liquid polymers, or of a solution of one or more polymers in a solvent, and the network made of nanoparticles is always in contact with the liquid medium or the liquid plastics-precursor material; and
(iii) production of the plastics via polymerization of the polymerizable compounds or solidification of the liquid polymers or removal of the solvent from the solution of the polymers,
where the production of the metal- or semimetal-containing network made of nanoparticles is induced by water liberated during the polymerization of the polymerizable plastics precursor, and the production of the metal- or semimetal-containing network made of nanoparticles takes place in the liquid plastics-precursor material.

2. Process according to Claim 1, where M is a metal selected from the group of Al, Pb, Ti, Zr, V, Nb, Ta, Zn and Cd.

3. Process according to Claim 2, where M is Al and x = 3.

4. Process according to Claim 3, where R is 2-butyl.

5. Process according to any of the preceding claims, where the plastics precursor is a polymerizable compound.

6. Process according to Claim 5, where the polymerizable compound is a vinyl-containing organic compound and a free-radical polymerization reaction takes place in step (iii).

7. Process according to Claim 6, where the plastics precursor has been selected from the group encompassing or consisting of methyl methacrylate, diethylene glycol methacrylate, styrene, divinylbenzene, trivinylcyclohexane and 2-hydroxyethyl methacrylate.

8. Process according to any of Claims 1 to 7, where acids or bases are then used to remove the metal-containing network made of nanoparticles.

## Revendications

1. Procédé pour la fabrication de matériaux synthétiques avec des réseaux métalliques ou semi-métalliques en nanoparticules, comprenant les étapes:
(i) fabrication d'un réseau métallique ou un semi-métallique en nanoparticules dans un milieu liquide par hydrolyse et polycondensation consécutive d'un ou de plusieurs alcoxydes de formule (1)
M(OR)ₓ (1)
dans un procédé sol-gel avec formation du réseau métallique ou semi-métallique en nanoparticules, où M représente un métal ou un semi-métal choisi dans le groupe formé par Li, Na, K, Mg, Ca, Sr, Ba, Al, In, Si, Sn, Pb, Sb, Bi, Y, Ti, Zr, V, Nb, Ta, Cr, W, Mn, Zn et Cd, R représente un radical C₁-C₁₀-alkyle ramifié ou non ramifié et x = 1 à 7 ;
(ii) remplacement du milieu liquide par un précurseur liquide de matériau synthétique, pour autant que le milieu liquide ne représente pas déjà le précurseur liquide de matériau synthétique, où le précurseur liquide de matériau synthétique est constitué par un ou plusieurs composés polymérisables, un ou plusieurs polymères liquides ou une solution d'un ou de plusieurs polymères dans un solvant et le réseau en nanoparticules est toujours en contact avec le milieu liquide ou le précurseur liquide de matériau synthétique; et
(iii) fabrication du matériau synthétique par polymérisation des composés polymérisables ou solidification des polymères liquides ou élimination du solvant de la solution des polymères,
dans lequel la fabrication du réseau métallique ou semi-métallique en nanoparticules est induite par l'eau libérée pendant la polymérisation du précurseur de matériau synthétique polymérisable et la fabrication du réseau métallique ou semi-métallique en nanoparticules est réalisée dans le précurseur liquide de matériau synthétique.

2. Procédé selon la revendication 1, dans lequel M est un métal choisi dans le groupe formé par Al, Pb, Ti, Zr, V, Nb, Ta, Zn et Cd.

3. Procédé selon la revendication 2, dans lequel M représente Al et x = 3.

4. Procédé selon la revendication 3, dans lequel R représente 2-butyle.

5. Procédé selon l'une quelconque des revendications précédentes, dans lequel le précurseur de matériau synthétique est un composé polymérisable.

6. Procédé selon la revendication 5, dans lequel le composé polymérisable est un composé organique contenant vinyle et qu'une polymérisation radicalaire a lieu dans l'étape (iii).

7. Procédé selon la revendication 6, dans lequel le précurseur de matériau synthétique est choisi dans le groupe comprenant ou constitué par le méthacrylate de méthyle, le méthacrylate de diéthylèneglycol, le styrène, le divinylbenzène, le trivinylcyclohexane et l'ester 2-hydroxyéthylique de l'acide méthacrylique.

8. Procédé selon l'une quelconque des revendications 1 à 7, où on utilise ensuite des acides ou des bases pour l'élimination du réseau métallique en nanoparticules.
